# EUROPÄISCHE PATENTANMELDUNG

(11) **EP 4 011 792 A1**
(43) Veröffentlichungstag der Anmeldung: **15.06.2022**
(21) Anmeldenummer: 20213797.2
(22) Anmeldetag: 14.12.2020
(51) Int. Cl.: B65B 59/00, B65B 59/02, B25J 5/00, B25J 13/00, B65B 9/04

(54) **VERPACKUNGSANLAGE**

(71) Anmelder: Uhlmann Pac-Systeme GmbH & Co. KG, 88471 Laupheim (DE)
(72) Erfinder: Riekenbrauck, Jörg, 88477 Schwendi (DE); Haaga, Stefan, 88480 Bronnen (DE); Scharpf, Sebastian, 89171 Illerkirchberg (DE)
(74) Vertreter: Wächter, Jochen

(57) **Zusammenfassung**

Eine erfindungsgemäße Verpackungsanlage (2) umfasst eine Verpackungsmaschine (4) und einen Roboter (6), der auf einem Transportwagen (8) gelagert ist, der entlang der Verpackungsmaschine (4) verfahrbar ist. Der Transportwagen (8) umfasst einen Rahmen (44), einen Stromabnehmer (42) und eine Mehrzahl von Betriebskomponenten. Der Rahmen (44) ist entlang der Verpackungsmaschine (4) beweglich gelagert, weist eine Lageranordnung (54) für Roboter (6) auf, und trägt die Mehrzahl von Betriebskomponenten. Der Stromabnehmer (42) ist dazu ausgebildet, kabellos mit einer Stromquelle in Verbindung zu stehen. Die Mehrzahl von Betriebskomponenten umfasst zumindest eine drahtlose Datenübertragungseinrichtung (36) und einen Antrieb (38).

## Beschreibung

Die vorliegende Erfindung betrifft eine Verpackungsanlage mit einer Verpackungsmaschine und einem Roboter, der auf einem Transportwagen entlang der Verpackungsmaschine verfahrbar ist.

Aus dem Stand der Technik sind Verpackungsanlagen bekannt, bei denen Roboter auf Wägen zwischen einem Magazin, das Verbrauchsmaterialien bereitstellt, und einzelnen Bearbeitungsstationen der Verpackungsanlage verfahrbar sind, die Bearbeitungsstationen mit Verbrauchsmaterialien zu versorgen. Die Einsatzmöglichkeiten solcher Roboter sind allerdings stark beschränkt.

Sollen die Roboter hingegen den Anlagenbediener in anderer Hinsicht unterstützen, zum Beispiel bei einem Formatwechsel der Verpackungsanlage, können kollaborierende Roboter eingesetzt werden. Um eine ausreichende Sicherheit zu gewährleisten, sind diese jedoch häufig hinsichtlich ihrer Dimensionen und aufnehmbaren Kräfte und somit wiederum in ihren Einsatzmöglichkeiten beschränkt.

Es ist daher eine Aufgabe der vorliegenden Erfindung, eine Verpackungsanlage mit einem Roboter bereitzustellen, der möglichst einfach und flexibel einsetzbar ist.

Diese Aufgabe wird durch den Gegenstand des Anspruchs 1 gelöst. Bevorzugte Ausführungsformen sind Gegenstand der Unteransprüche.

Eine erfindungsgemäße Verpackungsanlage umfasst eine Verpackungsmaschine mit einer Mehrzahl von Bearbeitungsstationen, die in einer Durchlaufrichtung der Verpackungsmaschine hintereinander angeordnet sind, und einen Roboter, der auf einem Transportwagen gelagert ist, wobei der Transportwagen entlang der Verpackungsmaschine verfahrbar ist. Der Transportwagen umfasst einen Rahmen, einen Stromabnehmer und eine Mehrzahl von Betriebskomponenten. Der Rahmen ist entlang der Verpackungsmaschine beweglich gelagert, weist eine Lageranordnung auf, auf der der Roboter gelagert ist, und trägt die Mehrzahl von Betriebskomponenten. Der Stromabnehmer ist zum Übertragen eines elektrischen Stroms auf den Transportwagen dazu ausgebildet ist, kabellos mit einer Stromquelle in Verbindung zu stehen. Die Mehrzahl von Betriebskomponenten umfasst eine Datenübertragungseinrichtung, die zur drahtlosen Kommunikation mit einer Maschinensteuerung der Verpackungsmaschine eingerichtet ist, und einen Antrieb zum Bewegen des Transportwagens entlang der Verpackungsmaschine. Weiterhin umfasst die Mehrzahl von Betriebskomponenten bevorzugt zumindest einen Verdichter, insbesondere einen Kompressor und/oder eine Vakuumpumpe.

Auf diese Art und Weise wird eine Verpackungsanlage mit einem Roboter bereitgestellt, der auf dem Transportwagen alle erforderlichen Betriebskomponenten zum Betreiben einer Vielzahl unterschiedlicher Werkzeuge, wie Halte- und Greifeinrichtungen, mit sich führt und dadurch flexibel für eine Vielzahl unterschiedlicher Aufgaben einsetzbar ist. Zudem sind der Transportwagen und der Roboter ohne eine Schleppkette betreibbar und verfahrbar, wodurch die Flexibilität weiter erhöht wird, der Wartungsaufwand reduziert wird und hohe Hygieneanforderungen erfüllbar sind.

Um die Mehrzahl von Betriebskomponenten und den Stromabnehmer zu tragen, sind diese am Rahmen des Transportwagens angebracht. Alternativ können der Stromabnehmer und die Mehrzahl von Betriebskomponenten jeweils für sich genommen auch an einem Gehäuse des Transportwagens angebracht sein, das wiederum am Rahmen befestigt ist oder selbsttragend einen Rahmen bildet. Dies gilt auch für alle weiteren Betriebskomponenten und Elemente des Transportwagens, die im Folgenden beschrieben sind und vom Rahmen getragen bzw. aufgenommen werden.

Der Transportwagen ist bevorzugt kabellos betreibbar, also nicht kabelgebunden. D. h., dass an dem Transportwagen keine Kabel, insbesondere keine Strom-, Signal-, oder Fluidleitungen, zum Verbinden des Transportwagens mit einer externen Stromquelle, Steuervorrichtung bzw. Fluidversorgung vorgesehen sind. Vielmehr führt der Transportwagen alle erforderlichen Komponenten hierzu mit sich oder weist kabellose (Strom-, Daten-) Verbindungen auf. Dadurch kann eine Schleppkette entfallen, die sonst zum Versorgen des Transportwagens und des Roboters erforderlich wäre, während der Roboter zugleich eine Vielzahl von Aufgaben übernehmen kann.

Der Entfall einer Schleppkette führt ferner dazu, dass der Transportwagen und der Roboter besser zu reinigen sind bzw. eine solche aufwändig zu reinigende Schleppkette nicht zu reinigen ist. In einer bevorzugten Ausführungsform ist zumindest eine erste Bearbeitungsstation der Mehrzahl von Bearbeitungsstationen der Verpackungsmaschine in einem Reinraum angeordnet und der Transportwagen mit dem Roboter ist zumindest im Bereich der ersten Bearbeitungsstation ebenfalls in dem Reinraum angeordnet. Die erste Bearbeitungsstation ist bevorzugte eine Füllstation, in der Produkte in eine Verpackung gefüllt werden. Der Einsatzbereich des Roboters kann somit auch dadurch erweitert werden.

Der zumindest eine Verdichter kann ein Druckluftkompressor und/oder eine Vakuumpumpe sein. Bevorzugt umfasst der Transportwagen zwei Verdichter, von denen einer als Druckluftkompressor und der andere als Vakuumpumpe ausgebildet ist. Es kann auch eine Mehrzahl von Druckluftkompressoren und/oder eine Mehrzahl von Vakuumpumpen vorgesehen sein. Der Verdichter ist bevorzugt mittels einer Fluidleitung mit einem Werkzeug des Roboters verbunden, das mittels des Fluids betätigbar ist. Zum Beispiel kann das Werkzeug eine Halte-/Greif- bzw. Klemmvorrichtung sein, die mittels Druckluft vom Druckluftkompressor betätigt, insbesondere geöffnet und geschlossen werden kann. Das Werkzeug kann zum Beispiel auch eine Saugvorrichtung sein, die mittels Unterdruck von der Vakuumpumpe Gegenstände, insbesondere zu verpackende Produkte oder Folienabschnitte, ansaugt und dadurch zur weiteren Handhabung erfasst.

Die Mehrzahl von Betriebskomponenten des Transportwagens kann auch ein Hydraulikaggregat umfassen, das vom Rahmen getragen wird. Vorzugsweise ist das Hydraulikaggregat mittels einer Hydraulikleitung mit einem Werkzeug des Roboters verbunden, das mittels des Hydraulikfluids betätigbar ist, wie zuvor in Bezug auf den Verdichter beschrieben.

Der Roboter ist bevorzugt ein Mehr-Achs-Roboter, vorzugsweise ein 2-, 3-, 4-, 5- oder 6-Achs-Roboter. Der Mehr-Achs-Roboter kann eine Mehrzahl von Servomotoren aufweisen, wobei die Anzahl der Mehrzahl von Servomotoren der Anzahl von Achsen des Mehr-Achs-Roboters entspricht. Somit umfasst der Roboter an jeder Achse einen Servomotor.

Es ist bevorzugt, dass die Mehrzahl von Betriebskomponenten weiterhin eine Steuervorrichtung zur Steuerung des Antriebs und zur Steuerung des Roboters umfasst. Im Folgenden wird eine Steuervorrichtung zur Steuerung des Antriebs auch als erste Steuervorrichtung und eine Steuervorrichtung zur Steuerung des Roboters auch als zweite Steuervorrichtung bezeichnet. Die erste und die zweite Steuervorrichtung können integral miteinander ausgebildet sein, d.h. durch eine gemeinsame Steuervorrichtung die beide Funktionen übernimmt. Die erste und die zweite Steuervorrichtung können aber auch getrennt voneinander ausgebildet sein. Die erste Steuervorrichtung ist mit dem Antrieb des Wagens kommunizierend verbunden. Die zweite Steuervorrichtung ist mit dem Roboter und insbesondere mit jedem der Mehrzahl von Servomotoren des Roboters kommunizierend verbunden. Die zweite Steuervorrichtung kann auch zur Steuerung eines Werkzeugs des Roboters mit diesem Werkzeug kommunizierend verbunden sein, insbesondere mit zumindest einem Steuerventil des Werkzeugs.

Des Weiteren können die erste und die zweite Steuervorrichtung mit der Datenübertragungseinrichtung kommunizierend verbunden sein. Mittels der Datenübertragungseinrichtung können sie wiederum kommunizierend mit der Maschinensteuerung der Verpackungsmaschine verbunden sein. Der Rahmen des Transportwagens trägt auch die erste und die zweite Steuervorrichtung.

Die Mehrzahl von Betriebskomponentenkann ferner eine Steuervorrichtung zur Steuerung des zumindest einen Verdichters umfassen. Die Steuervorrichtung zur Steuerung des zumindest einen Verdichters wird im Folgenden auch als dritte Steuervorrichtung bezeichnet und kann analog zur ersten und zweiten Steuervorrichtung integral mit der ersten und der zweiten Steuervorrichtung oder getrennt von diesen ausgebildet sein.

Die Steuervorrichtung kann im Allgemeinen auch Funktionen zur Gewährleistung der Sicherheit für Personen und zur Gewährlistung des sicheren Betriebes des Transportwagens und des Roboters übernehmen. Dazu ist die Steuervorrichtung mit entsprechenden Sensoren kommunizierend verbunden, wie unten beschrieben.

Vorzugsweise umfasst der Transportwagen zumindest ein erstes Netzteil und ein zweites Netzteil, die jeweils mit dem Stromabnehmer elektrisch verbunden sind, wobei das erste Netzteil dazu eingerichtet ist, zur elektrischen Energieversorgung der Mehrzahl von Betriebskomponenten auf dem Transportwagen eine Eingangsspannung in eine erste Ausgangsspannung umzuwandeln, und wobei das zweite Netzteil dazu eingerichtet ist, zur elektrischen Energieversorgung des Roboters, insbesondere jedes der Mehrzahl von Servomotoren des Roboters, auf dem Transportwagen die Eingangsspannung in eine zweite Ausgangsspannung umzuwandeln. Dadurch können die jeweils erforderlichen Spannungen zur elektrischen Energieversorgung der Betriebskomponenten und des Roboters direkt auf dem Transportwagen bereitgestellt werden.

Insbesondere kann das erste Netzteil wahlweise mit einem oder mehreren aus dem Antrieb, dem Verdichter, der ersten und der zweiten Steuervorrichtung und der Datenübertragungseinrichtung elektrisch verbunden sein. Das zweite Netzteil ist bevorzugt mit jedem der Mehrzahl von Servomotoren des Roboters elektrisch verbunden. Vorzugsweise ist die Eingangsspannung eine Wechselspannung, die zwischen 200 V und 600 V, mehr bevorzugt zwischen 300 V und 500 V, noch mehr bevorzugt zwischen 350 V und 450 V beträgt. Die erste Ausgangsspannung ist vorzugsweise eine Gleichspannung, die zwischen 6 V und 32 V, mehr bevorzugt zwischen 12 V und 24 V beträgt. Die zweite Ausgangsspannung ist vorzugsweise eine Gleichspannung, die zwischen 500 V und 700 V, mehr bevorzugt zwischen 550 V und 650 V beträgt. Der Rahmen des Transportwagens trägt auch das erste und das zweite Netzteil.

Des Weiteren kann die Mehrzahl von Komponenten zumindest einen Sensor umfassen. Der zumindest eine Sensor ist gewählt aus einem optischen Sensor, wie z.B. einem Kamerasystem, zur Identifikation zu transportierender Güter, zur Dokumentation des Betriebs des Roboters oder zur Überwachung eines Umfelds des Roboters, einem oder mehreren Positionssensoren zur Erkennung der Position des Transportwagens und/oder des Roboters, und einem Beschleunigungs- oder Vibrationssensor zur Überwachung des Transportwagens und/oder des Roboters. Es kann jeweils ein Positionssensor am Antrieb sowie an den Servomotoren des Roboters vorgesehen sein. Zur Identifikation von Arbeitspositionen, Werkzeugen und Werkstücken kann der Sensor auch ein Codelesesensor sein. Zur Überwachung des Umfelds des Roboters eignen sich auch Laser- oder Radarsensoren. Ein zusätzlicher Sensor kann auch ein mechanischer, kapazitiver oder induktiver Sensor auf einem Roboterwerkzeug zur Erfüllung der Prozessaufgaben sein. Die Mehrzahl von Sensoren kann eine beliebige Anzahl und Kombination der hier beschriebenen Sensoren umfassen.

Die Verpackungsanlage umfasst in einer bevorzugten Ausführungsform zumindest eine Führungsschiene, die entlang der Verpackungsmaschine und vorzugsweise zumindest abschnittsweise parallel zur Durchlaufrichtung verläuft, wobei der Rahmen des Transportwagens beweglich auf der zumindest einen Führungsschiene gelagert ist. Die zumindest eine Führungsschiene verläuft vorzugsweise unter dem Transportwagen, sodass dieser samt dem Roboter auf der Führungsschiene steht. Bevorzugt umfasst die Verpackungsanlage zwei parallele Führungsschienen, wie zuvor beschrieben, um eine möglichst stabile Lagerung und Führung des Transportwagens zu ermöglichen.

Die zumindest eine Führungsschiene weist vorzugsweise ein im Wesentlichen C-förmiges Querschnittsprofil auf mit einem ersten Schenkel, einem zweiten Schenkel und einem dritten Schenkel, wobei sich der zweite und der dritte Schenkel im Wesentlichen senkreckt von jeweils einem Ende des ersten Schenkels erstrecken. Vorzugsweise ist der erste Schenkel im Wesentlichen vertikal ausgerichtet und der zweite und der dritte Schenkel sind im Wesentlichen horizontal ausgerichtet. Der Transportwagen ist dann zwischen dem zweiten und dem dritten Schenkel der Führungsschiene gelagert und dadurch sowohl nach oben als auch nach unten abgestützt. Dabei wirkt die Gewichtskraft des Transportwagens und des darauf angeordneten Roboters nach unten auf den zweiten Schenkel. Im Falle ruckartiger Bewegungen des Transportwagens oder des Roboters können jedoch Kippmomente auftreten, aus denen nach oben gerichtete Kräfte resultieren. Diese wirken dann nach oben auf den dritten Schenkel der Führungsschiene. Der Transportwagen kann weiterhin auch lateral gegen den ersten Schenkel der zumindest einen Führungsschiene abgestützt sein. Sind zwei Führungsschienen vorgesehen, sind diese vorzugsweise derart angeordnet, dass ihre Öffnungen des C-förmigen Querschnittsprofils voneinander abgewandt sind, d.h. dass die zweiten und dritten Schenkel der beiden Führungsschienen in entgegengesetzte Richtungen ausgerichtet sind.

Die zumindest eine Führungsschiene kann eine Verzweigung oder Weiche aufweisen, an der der Transportwagen einschleusbar und ausschleusbar ist. Alternativ kann hierzu auch eine Zuführung bevorzugt an einem Ende der zumindest einen Führungsschiene vorgesehen sein. Dadurch können auf einfache Art und Weise unterschiedlich ausgerüstete Transportwagen oder Roboter in die Verpackungsanlage eingeschleust werden oder beispielsweise Transportwagen mit verschmutzten Robotern zur Reinigung ausgeschleust werden.

Zur beweglichen Lagerung des Transportwagens auf der zumindest einen Führungsschiene umfasst der Transportwagen bevorzugt eine Mehrzahl von Laufrollen und der Rahmen des Transportwagens ist mittels der Mehrzahl von Laufrollen beweglich auf der zumindest einen Führungsschiene gelagert. Die Mehrzahl von Laufrollen stützt den Transportwagen vollständig auf der zumindest einen Führungsschiene ab, sie nehmen also die gesamte Last des Transportwagens und des Roboters auf.

Bevorzugt ist jede Laufrolle der Mehrzahl von Laufrollen zwischen dem zweiten und dem dritten Schenkel der zumindest einen C-förmigen Führungsschiene angeordnet. Eine Oberseite des zweiten Schenkels bildet dann eine Lauffläche für die Laufrollen. Zudem kann jede Laufrolle axial am ersten Schenkel der zumindest einen C-förmigen Führungsschiene abgestützt sein. Sind zwei Führungsschienen vorgesehen, umfasst der Transportwagen vorzugsweise eine Mehrzahl von Laufrollen je Führungsschiene, um möglichst stabil gelagert zu sein.

Alternativ könnte der Transportwagen auch mittels eines Lineargleitlagers, einer schwebenden Lagerung auf einer Magnetschiene, oder einfach mittels Rädern auf dem Boden gelagert sein.

In einer besonders bevorzugten Ausführungsform umfasst der Transportwagen eine Mehrzahl von Laufrollenpaketen, wobei jedes Laufrollenpaket zumindest zwei Laufrollen, vorzugsweise drei Laufrollen, der Mehrzahl von Laufrollen und einen Träger umfasst, an dem die zumindest zwei Laufrollen drehbar gelagert sind. Der Träger kann integral mit dem Rahmen des Transportwagens ausgebildet sein, am Rahmen des Transportwagens angebracht sein, oder besonders bevorzugt am Rahmen des Transportwagens schwenkbar gelagert sein. Vorzugsweise umfasst der Transportwagen zwei Laufrollenpakete je Führungsschiene, wobei die zwei Laufrollenpakete in Längsrichtung der Führungsschiene zueinander beabstandet sind.

Um eine möglichst präzise Lagerung des Transportwagens auf der zumindest einen Führungsschiene zu erreichen, kann eine Laufrolle der zumindest zwei Laufrollen jedes Laufrollenpakets in einer Richtung senkrecht zur Lauffläche der zumindest einen Führungsschiene und vorzugsweise senkrecht zu einer Drehachse der Laufrolle verstellbar sein. Vorzugsweise ist hierzu die Achse der verstellbaren Laufrolle entsprechend verschiebbar im jeweiligen Träger gelagert. Die Lauffläche der zumindest einen Führungsschiene ist eine den Laufrollen zugewandte Fläche des zweiten Schenkels der zumindest einen C-förmigen Führungsschiene. Bevorzugt umfasst jedes Laufrollenpaket drei Laufrollen, von denen die mittlere Laufrolle senkrecht zur Lauffläche verstellbar ist. Durch diese Ausbildung der Laufrollenpakete wird erreicht, dass der Transportwagen samt Roboter zum einen zuverlässig in Richtung der Gewichtskraft auf der zumindest einen Führungsschiene abgestützt ist, während die verstellbare Laufrolle präzise gegen den oberen dritten Schenkel der zumindest einen C-förmigen Führungsschiene positioniert werden kann, um auch Kippmomente oder unerwartete Bewegungen sicher abzustützen. Der Transportwagen und der Roboter sind dadurch in jeder Situation optimal und laufruhig gelagert.

Zur kabellosen Spannungsübertragung auf den Stromabnehmer umfasst die Verpackungsanlage bevorzugt einen Stromleiter, insbesondere ein Leiterkabel oder eine Leiterschiene, wobei der Stromabnehmer des Transportwagens mit dem Stromleiter in Schleifkontakt steht. Dadurch wird eine effektive und kostengünstig umzusetzende kabellose Stromversorgung ermöglicht.

Der Stromleiter ist mit einer Spannungsquelle verbunden und versorgt darüber den Stromabnehmer und somit den Transportwagen mit elektrischer Spannung. Vorzugsweise ist der Stromleiter parallel zu und auf eine Höhe mit der zumindest einen Führungsschiene angeordnet. Zum Beispiel verläuft der Stromleiter in einem Abstand von 20 mm bis 140 mm, mehr bevorzugt von 40 mm bis 80 mm zur zumindest einen Führungsschiene. Sind zwei Führungsschienen vorgesehen, kann der Stromleiter zwischen den zwei Führungsschienen oder bevorzugt auf einer Seite außerhalb der beiden Führungsschienen angeordnet sein.

Vorzugsweise umgibt der Stromabnehmer des Transportwagens den Stromleiter teilweise, um für eine zuverlässige und ununterbrochene Stromversorgung zu sorgen. Zum Beispiel ist der Stromabnehmer als Leiterschiene ausgebildet, die einen im Wesentlichen rechteckigen Querschnitt aufweist, und der Stromabnehmer umgibt und kontaktiert die Leiterschiene an zumindest zwei oder drei Seiten. Der Stromleiter kann auch integral mit der Führungsschiene ausgebildet sein.

Alternativ könnte die Spannung auch mittels Induktion auf den Stromabnehmer übertragen werden.

Zum Bewegen des Transportwagens entlang der Verpackungsmaschine kann die Verpackungsanlage ferner eine Zahnstange umfassen, die entlang der Verpackungsmaschine verläuft, und der Antrieb des Transportwagens kann ein Ritzel umfassen, das mit der Zahnstange in Eingriff steht. Bevorzugt umfasst der Antrieb des Transportwagens einen Elektromotor, auf dessen Antriebswelle das Ritzel gelagert ist. Die Paarung aus Zahnstange und Ritzel eignet sich besonders gut zum Antreiben des Transportwagens, da große Kräfte übertragbar und hohe Beschleunigungen erreichbar sind. Zudem kann eine Teilung der Zahnstange derart gewählt werden, dass sowohl die Zahnstange als auch die zumindest eine Führungsschiene modular ausgebildet werden können und eine Länge jedes Zahnstangenmoduls einer Länge jedes Führungsschienenmoduls entspricht.

Vorzugsweise ist die Zahnstange parallel zu und auf eine Höhe mit der zumindest einen Führungsschiene angeordnet. Zum Beispiel verläuft die Zahnstange dann in einem Abstand von 30 mm bis 140 mm, mehr bevorzugt von 50 mm bis 80 mm zur zumindest einen Führungsschiene. Sind zwei Führungsschienen vorgesehen, kann die Zahnstange zwischen den zwei Führungsschienen oder auf einer Seite außerhalb der beiden Führungsschienen angeordnet sein. Die Zahnstange kann aber auch an der zumindest einen Führungsschiene angeordnet sein, z.B. an einer Oberseite des dritten Schenkels der C-förmigen Führungsschiene.

Es ist weiterhin bevorzugt, dass die Zahnstange derart angeordnet ist, dass Zähne der Zahnstange seitwärts gerichtet sind. Die Spitzen oder Stirnflächen der Zähne der Zahnstange verlaufen dann im Wesentlichen vertikal und nicht horizontal. Dadurch wird verhindert, dass sich in den Tälern zwischen den Zähnen Verschmutzungen ansammeln können, wodurch eine gute Reinigung der Verpackungsanlage weiter begünstigt wird.

Alternativ kann der Antrieb des Transportwagens auch über angetriebene Räder, einen (elektromagnetischen) Linearantrieb, einen Kabelzug oder einen (Zahn-) Riemenantrieb erfolgen.

Um die Verpackungsanlage noch besser reinigen zu können, umfasst die Verpackungsanlage bevorzugt eine Abdeckung im Bereich der zumindest einen Führungsschiene. Die Abdeckung ist bevorzugt mehrteilig ausgebildet und bildet eine Einhausung, in der die zumindest eine Führungsschiene und vorzugsweise auch der Stromleiter und die Zahnstange aufgenommen sind, wodurch diese gegenüber der Mehrzahl von Bearbeitungsstationen der Verpackungsmaschine vor Verschmutzung geschützt sind. Die Abdeckung bzw. die dadurch gebildete Einhausung weist einen Spalt oberhalb und entlang der zumindest einen Führungsschiene auf, durch den der Transportwagen auf der zumindest einen Führungsschiene gelagert ist. Bei zwei Führungsschienen weist die Abdeckung bzw. die Einhausung entsprechend zwei Spalte auf. In jedem Spalt können Bürsten vorgesehen sein, die eine Verschmutzung darunter liegender Bereiche weiter reduzieren aber der Bewegbarkeit des Transportwagens nicht entgegenstehen. Es ist auch denkbar, dass der Transportwagen weiterhin eine Reinigungsvorrichtung, insbesondere in Form einer Saugvorrichtung umfasst, um den Spalt und/oder die darunterliegenden Bereiche zu reinigen. Zur Vermeidung der Verschmutzung des Spalts kann die Abdeckung auch derart ausgebildet sein, dass sie sich dynamisch vor dem passierenden Transportwagen öffnet und nach diesem schließt.

In einer weiteren Ausführungsform umfasst die Verpackungsanlage zumindest einen weiteren Roboter, der auf einem weiteren Transportwagen gelagert ist, wobei der weitere Transportwagen entlang der Verpackungsmaschine verfahrbar ist. Der weitere Roboter und der weitere Transportwagen können gemäß der vorangehenden Beschreibung ausgebildet sein und folglich alle Merkmale des hierin beschriebenen Roboters bzw. Transportwagens aufweisen. Zur einfacheren Beschreibung des Roboters und des weiteren Roboters werden diese im Folgenden auch als erster und zweiter Roboter bezeichnet. Zur einfacheren Beschreibung des Transportwagens und des weiteren Transportwagens werden diese im Folgenden auch als erster und zweiter Transportwagen bezeichnet. Es versteht sich, dass analog auch eine beliebige Mehrzahl von Robotern bzw. Transportwagen vorgesehen sein kann.

Vorzugsweise sind der erste und der zweite Transportwagen auf derselben zumindest einen Führungsschiene angeordnet. Der erste und der zweite Roboter können unterschiedliche Aufgaben übernehmen, zum Beispiel unterschiedliche Werkzeuge aufweisen. Der erste und der zweite Roboter können auch zur Erhöhung der Effizienz jeweils einem Teil der Mehrzahl von Bearbeitungsstationen der Verpackungsmaschine zugeordnet sein, um die Fahrwege kurz zu halten.

Eine zuverlässige, sichere und schnelle Datenübertragung wird dadurch gewährleistet, dass die Datenübertragungseinrichtung bevorzugt eine optische Datenübertragungseinrichtung ist. Die optische Datenübertragung kann durch optische Freiraumübertragung beispielsweise mittels Laser oder Infrarot erfolgen. Die Datenübertragung mittels der Datenübertragungseinrichtung erfolgt vorzugsweise mit einer Datenübertragungsrate, die mindestens 16 Mbits/s, mehr bevorzugt mindestens 50 Mbits/s, noch mehr bevorzugt mindestens 100 Mbits/s.

Die Verpackungsanlage umfasst bevorzugt eine optische Übertragungseinrichtung, die als frei strahlender Sender ausgebildet sein kann. Die Übertragungseinrichtung ist bevorzugt kommunizierend mit der Maschinensteuerung der Verpackungsmaschine verbunden. Die Datenübertragungseinrichtung am Transportwagen umfasst einen entsprechenden Empfänger. Zwischen der Übertragungseinrichtung und der Datenübertragungseinrichtung ist ein Lichtstrahl zur Datenübertragung ausgerichtet.

Es versteht sich, dass die Datenübertragung auch bidirektional erfolgen kann und sowohl die Übertragungseinrichtung als auch die Datenübertragungseinrichtung sowohl als Sender als auch als Empfänger ausgebildet sind. Zum Schutz von Sender und Empfänger sowie des Lichtstrahls kann zumindest die Datenübertragungseinrichtung und vorzugsweise auch die Übertragungseinrichtung im Bereich der zumindest einen Führungsschiene, insbesondere unter der Abdeckung bzw. innerhalb der durch diese gebildeten Einhausung angeordnet sein.

In einer bevorzugten Ausführungsform umfasst die Datenübertragungseinrichtung eine erste Kommunikationsschnittstelle und eine zweite Kommunikationsschnittstelle, wobei die erste Kommunikationsschnittstelle dazu eingerichtet ist, mit der Maschinensteuerung zu kommunizieren, und die zweite Kommunikationsschnittstelle dazu eingerichtet ist mit einer Datenübertragungseinrichtungen des zweiten Transportwagens zu kommunizieren.

Die erste Kommunikationsschnittstelle entspricht folglich dem zuvor beschriebenen Empfänger der Datenübertragungseinrichtung des Transportwagens. Die erste Kommunikationsschnittstelle ist daher der Übertragungseinrichtung der Verpackungsanlage zugewandt am ersten Transportwagen angebracht. Die zweite Kommunikationsschnittstelle ist dem zweiten Transportwagen zugewandt am ersten Transportwagen angebracht. Ein für den zweiten Transportwagen bestimmtes Signal kann von der Übertragungseinrichtung an die erste Kommunikationsschnittstelle des ersten Transportwagens gesendet werden und vom ersten Transportwagen mittels der zweiten Kommunikationsschnittstelle an die Datenübertragungseinrichtung des zweiten Transportwagens gesendet werden.

Schließlich umfasst die Mehrzahl von Bearbeitungsstationen zumindest eine Formstation, eine Füllstation, eine Siegelstation, eine Stanzstation und einen Kartonierer, wobei der Roboter entlang aller Bearbeitungsstationen der Mehrzahl von Bearbeitungsstationen verfahrbar ist. Die Verpackungsanlage umfasst ferner zumindest einen Bereitstellungsraum für Verbrauchsmaterial, wobei der Roboter dazu eingerichtet ist, die Mehrzahl von Bearbeitungsstationen mit Verbrauchsmaterial zu versorgen. In diesem Fall ist die Verpackungsmaschine bevorzugt als Blistermaschine ausgebildet.

Die Verpackungsmaschine kann als Bearbeitungsstation weiterhin in Durchlaufrichtung einen Eingangsbereich zum Beispiel zur Bereitstellung einer Formfolie und/oder einer Deckfolie vor der Formstation, eine Heizvorrichtung vor der Formstation, eine Übergabevorrichtung an eine Transportvorrichtung zwischen der Stanzstation und dem Kartonierer und eine Zuführvorrichtung für Packungsbeilagen, wie Broschüren oder Prospekte, umfassen. Der Roboter kann dazu eingerichtet sein, mit zumindest einem Teil oder mit jeder diese Stationen bzw. Vorrichtungen wechselzuwirken.

Zum Beispiel kann der Roboter dazu eingerichtet sein, die Verpackungsmaschine im Eingangsbereich bei Bedarf mit einer neuen Rolle einer Formfolie und/oder einer Deckfolie zu bestücken. Insbesondere bei einem Formatwechsel kann der Roboter dazu eingerichtet sein, einen Anfang der Formfolie und/oder der Deckfolie in die Verpackungsmaschine einzulegen. Hierzu führt der Roboter einen freien Endabschnitt der Form- bzw. Deckfolie durch die Mehrzahl von Bearbeitungsstationen und um Umlenkelemente in der Verpackungsmaschine. Des Weiteren kann der Roboter dazu eingerichtet sein, zumindest einen Produktspeicher der Füllstation bei Bedarf durch einen gefüllten Produktspeicher zu ersetzen oder den zumindest einen Produktspeicher mit Produkten zu befüllen. Insbesondere bei einem Formatwechsel kann der Roboter weiterhin dazu eingerichtet sein, Werkzeuge der Mehrzahl von Bearbeitungsstationen auszuwechseln, wie zum Beispiel ein Formwerkzeug der Formstation, ein Siegelwerkzeug der Siegelstation oder ein Stanzwerkzeug der Stanzstation. Schließlich kann der Roboter auch dazu eingerichtet sein, zumindest eine Bearbeitungsstation der Mehrzahl von Bearbeitungsstationen, wie zum Beispiel die Füllstation, zu reinigen. Geeignet ist hierzu zum Beispiel die Reinigung mittels Druckluft oder CO₂, mittels einer Saugvorrichtung oder einer Wischvorrichtung.

Weitere Vorteile und Merkmale der vorliegenden Erfindung ergeben sich aus der nachfolgenden Beschreibung unter Bezugnahme auf die beigefügten Zeichnungen.
- Fig. 1: zeigt schematisch eine erfindungsgemäße Verpackungsanlage in einer perspektivischen Ansicht.
- Fig. 2: zeigt schematisch einen Transportwagen der Verpackungsanlage nach Fig. 1 in einer perspektivischen Ansicht mit den von ihm aufgenommenen Komponenten.
- Fig. 3: zeigt schematisch einen Ausschnitt der Verpackungsanlage nach Fig. 1 in einer perspektivischen Schnittansicht.
- Fig. 4: zeigt den Ausschnitt nach Fig. 3 in einer perspektivischen Ansicht.
- Fig. 5: zeigt schematisch einen Transportwagen mit einem Roboter nach den Fig. 1-4 in einer perspektivischen Ansicht.
- Fig. 6, 7: zeigen ein Laufrollenpaket des Transportwagens nach Fig. 1-5.

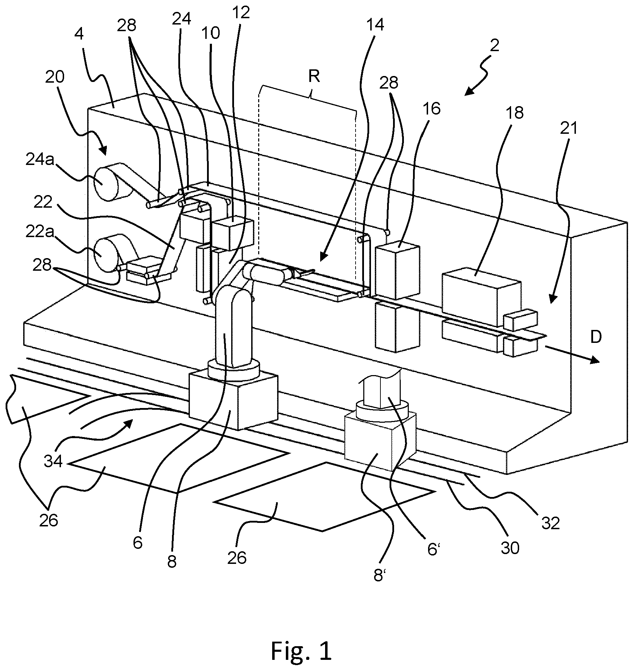

In Fig. 1 ist eine erfindungsgemäße Verpackungsanlage 2 schematisch dargestellt. Die Verpackungsanlage 2 umfasst eine Verpackungsmaschine 4 sowie einen Roboter 6, der auf einem Transportwagen 8 gelagert ist. Der Transportwagen 8 ist entlang der Verpackungsmaschine 4 verfahrbar. Die Verpackungsmaschine 4 umfasst eine Mehrzahl von Bearbeitungsstationen, wie zum Beispiel eine Heizvorrichtung 10, eine Formstation 12, eine Füllstation 14, eine Siegelstation 16, eine Stanzstation 18 sowie beliebige weitere Bearbeitungsstationen (nicht dargestellt), zu denen eine Übergabevorrichtung, eine Transportvorrichtung, eine Zuführvorrichtung für Packungsbeilagen, wie Broschüren oder Prospekte, und ein Kartonierer, die auf die Stanzstation 18 folgen, zählen können. Die Mehrzahl von Bearbeitungsstationen 10, 12, 14, 16, 18 ist in einer Durchlaufrichtung D der Verpackungsmaschine 4 hintereinander angeordnet, die von einem Eingangsbereich 20 der Verpackungsmaschine 4 zu einem Ausgangsbereich 21 der Verpackungsmaschine 4 gerichtet ist.

Bevorzugt ist die Verpackungsmaschine 4 als Blistermaschine mit einem Eingangsbereich 20 ausgebildet, in dem eine Formfolie 22 auf einer Rolle 22a und eine Deckfolie 24 auf einer Rolle 24a bereitgestellt sein können. In diesem Fall verläuft die Formfolie 22 durch die Heizvorrichtung 10 zum Erwärmen der Formfolie 22, die Formstation 12 zum Formen von Produktaufnahmen, wie Blisternäpfen, in die Formfolie 22, die Füllstation 14 zum Füllen von Produkten in die Produktaufnahmen der Formfolie 22, die Siegelstation 16 zum Siegeln der Deckfolie 24 an die Formfolie 22 und die Stanzstation 18 zum Ausstanzen einzelner Blisterpackungen aus dem Verbund aus Formfolie 22 und Deckfolie 24.

Der Roboter 6 ist dazu eingerichtet mit der Verpackungsmaschine 4 wechselzuwirken. Insbesondere ist der Roboter 6 dazu eingerichtet, mit der Mehrzahl von Bearbeitungsstationen 10, 12, 14, 16, 18 zu interagieren und ist deshalb bevorzugt entlang aller Bearbeitungsstationen der Mehrzahl von Bearbeitungsstationen 10, 12, 14, 16, 18 verfahrbar. So kann die Verpackungsanlage 2 weiterhin zumindest einen Bereitstellungsraum 26 oder, wie dargestellt, eine Mehrzahl von Bereitstellungsräumen 26 für Verbrauchsmaterial aufweisen und der Roboter 6 ist dann dazu eingerichtet, die Mehrzahl von Bearbeitungsstationen 10, 12, 14, 16, 18 mit Verbrauchsmaterial zu versorgen.

Zum Beispiel können im Bereitstellungsraum 26 nahe des Eingangsbereichs 20 weitere Rollen 22a, 24a der Formfolie 22 bzw. Deckfolie 24 bereitgestellt sein und der Roboter 6 ist dazu eingerichtet, die Verpackungsmaschine 4 im Eingangsbereich 20 bei Bedarf mit einer neuen Rolle 22a, 24a zu bestücken. Insbesondere bei einem Formatwechsel kann der Roboter 6 auch dazu eingerichtet sein, einen Anfang der Formfolie 22 in die Verpackungsmaschine 4 einzulegen. Hierzu führt der Roboter einen freien Endabschnitt der Formfolie 22 durch die Mehrzahl von Bearbeitungsstationen 10, 12, 14, 16, 18 und um Umlenkelemente 28 in der Verpackungsmaschine 4. Analog kann der Roboter 6 auch dazu eingerichtet sein, einen Anfang der Deckfolie 24 in die Verpackungsmaschine 4 einzulegen, indem er einen freien Endabschnitt der Deckfolie 24 um Umlenkelemente 28 in der Verpackungsmaschine 4 und zumindest in die Siegelstation 16 führt. Des Weiteren kann der Roboter 6 dazu eingerichtet sein, zumindest einen Produktspeicher der Füllstation 14 bei Bedarf durch einen gefüllten Produktspeicher zu ersetzen oder den zumindest einen Produktspeicher mit Produkten zu befüllen. Insbesondere bei einem Formatwechsel kann der Roboter 6 weiterhin dazu eingerichtet sein, Werkzeuge der Mehrzahl von Bearbeitungsstationen 10, 12, 14, 16, 18 auszuwechseln, wie zum Beispiel ein Formwerkzeug der Formstation 12, ein Siegelwerkzeug der Siegelstation 16 oder ein Stanzwerkzeug der Stanzstation 18. Schließlich kann der Roboter 6 auch dazu eingerichtet sein, zumindest eine Bearbeitungsstation der Mehrzahl von Bearbeitungsstationen 10, 12, 14, 16, 18, wie zum Beispiel die Füllstation 14, zu reinigen. Geeignet ist hierzu zum Beispiel die Reinigung mittels Druckluft oder CO₂.

Zumindest eine erste Bearbeitungsstation der Mehrzahl von Bearbeitungsstationen 10, 12, 14, 16, 18 kann in einem Reinraum R angeordnet sein, sodass auch der Roboter 6 im Bereich der ersten Bearbeitungsstation im Reinraum angeordnet ist. In der dargestellten Ausführungsform entspricht die erste Bearbeitungsstation der Füllstation 14. Der Reinraum R ist zwischen gestrichelt angedeuteten Grenzen ausgebildet und dort üblicherweise von den anderen Bearbeitungsstationen 10, 12, 16, 18 der Mehrzahl von Bearbeitungsstationen 10, 12, 14, 16, 18 durch geeignete Abtrennungen abgegrenzt.

Ein weiterer Roboter 6' ist in Fig. 1 angedeutet, der auf einem weiteren Transportwagen 8' gelagert ist, wobei auch der weitere Transportwagen 8' entlang der Verpackungsmaschine 4 verfahrbar ist. Dadurch, dass die Verpackungsanlage 2 somit eine Mehrzahl von Robotern 6, 6' umfasst, können diese entweder mit unterschiedlichen Werkzeugen zur Wahrnehmung unterschiedlicher Aufgaben bestückt sein und/oder unterschiedlichen Bearbeitungsstationen der Mehrzahl von Bearbeitungsstationen 10, 12, 14, 16, 18 zugeordnet sein.

Die Verpackungsanlage 2 umfasst zumindest eine Führungsschiene 30, bevorzugt zwei parallele Führungsschienen 30, 32, die entlang der Verpackungsmaschine 4 verlaufen, wobei der Transportwagen 8 beweglich auf den Führungsschienen 30, 32 gelagert ist. Die Führungsschienen 30, 32 verlaufen bevorzugt parallel zur Durchlaufrichtung D der Verpackungsmaschine 4. Zum Ein- und Ausschleusen des Transportwagens 8 kann weiterhin eine Verzweigung bzw. Weiche 34 vorgesehen sein, an der der Transportwagen 8 auf die Führungsschienen 30, 32 bzw. von den Führungsschienen herunter geführt werden kann.

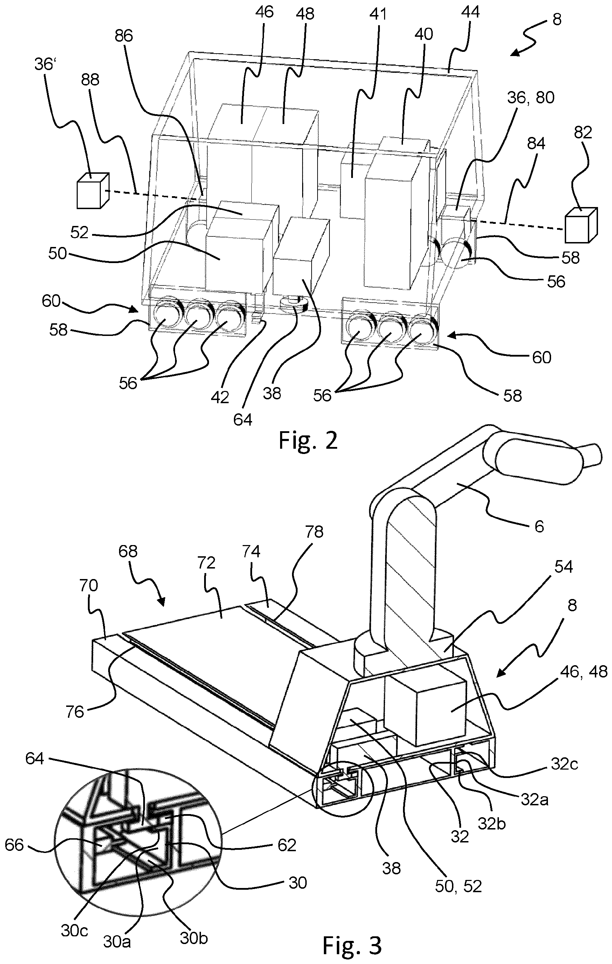

Der Transportwagen 8 ist nachfolgend unter Bezugnahme auf die Fig. 2-5 näher beschrieben.

Wie in Fig. 2 zu sehen ist, umfasst der Transportwagen 8 eine Mehrzahl von Betriebskomponenten, die z.B. eine Datenübertragungseinrichtung 36 zur drahtlosen Kommunikation mit einer Maschinensteuerung der Verpackungsmaschine 4, einen Antrieb 38 zum Bewegen des Transportwagens 8 entlang der Verpackungsmaschine 4, und zumindest einen Verdichter 40, 41 umfasst. Zudem umfasst der Transportwagen 8 einen Stromabnehmer 42 zum Übertragen eines elektrischen Stroms auf den Transportwagen 8.

Die Datenübertragungseinrichtung 36 kann eine optische Datenübertragungseinrichtung sein. Hier umfasst der Transportwagen 8 zwei Verdichter, von denen einer als Druckluftkompressor 40 und der andere als Vakuumpumpe 41 ausgebildet ist. Der Stromabnehmer 42 ist dazu ausgebildet, kabellos mit einer Stromquelle in Verbindung zu stehen. Der Verdichter 40 kann eine Druckluftkompressor zum Versorgen des Roboters mit Druckluft und/oder eine Vakuumpumpe zum versorgen des Roboters mit Unterdruck sein.

Weiterhin umfasst der Transportwagen 8 einen Rahmen 44, der die Mehrzahl von Betriebskomponenten, also die Datenübertragungseinrichtung 36, den Antrieb 38 und den Verdichter 40, sowie den Stromabnehmer 42 trägt. Bevorzugt trägt der Rahmen 44 des Transportwagens 8 auch alle weiteren Betriebskomponenten und Einrichtungen des Transportwagens 8, die hierin beschrieben sind. Zum Beispiel umfasst die Mehrzahl von Betriebskomponenten des Transportwagens 8 noch eine erste Steuervorrichtung 46 zur Steuerung des Antriebs 38 und eine zweite Steuervorrichtung 48 zur Steuerung des Roboters 6.

Des Weiteren kann die Mehrzahl von Betriebskomponenten ein erstes Netzteil 50 und ein zweites Netzteil 52 umfassen, die jeweils mit dem Stromabnehmer 42 elektrisch verbunden sind. Das erste und das zweite Netzteil 50, 52 sind zur elektrischen Energieversorgung der Betriebskomponenten auf dem Transportwagen 8 und des Roboters 6 vorgesehen und wandeln eine Eingangsspannung, die vom Stromabnehmer 42 aufgenommen wird, in unterschiedliche Ausgangsspannungen um. Insbesondere wandelt das erste Netzteil 50 zur Versorgung der Mehrzahl von Betriebskomponenten die Eingangsspannung in eine erste Ausgangsspannung von beispielsweise 24 V um. Das zweite Netzteil 52 kann zur Versorgung des Roboters 6 die Eingangsspannung in eine zweite Ausgangsspannung von beispielsweise 600 V umwandeln.

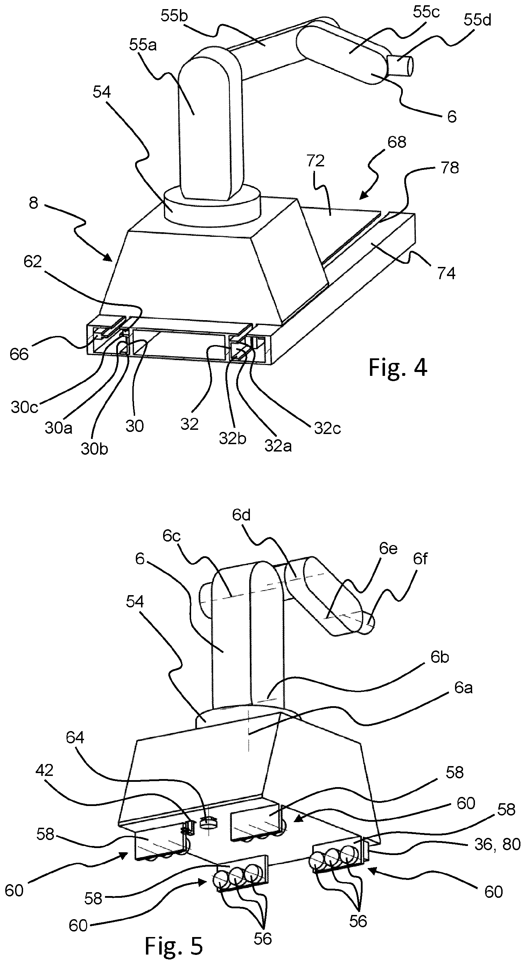

Wie in Fig. 3-5 zu sehen, umfasst der Rahmen 44 zudem eine Lageranordnung 54, die den Roboter 6 trägt. Der Roboter 6 umfasst hier einen ersten bis einen vierten Arm 55a-d, von denen jeweils zwei benachbarte Arme um zumindest eine Achse 6a-f gelenkig miteinander verbunden sind. In Fig. 5 sind eine erste Achse 6a, eine zweite Achse 6b, eine dritte Achse 6c, eine vierte Achse 6d, eine fünfte Achse 6e und eine sechste Achse 6f dargestellt, um die die Arme 55a-d des Roboters 6 bewegbar sind. Je Achse 6a-6f kann der Roboter 6 einen Servomotor zur Bewegung des zumindest einen angrenzenden Arms 55a-d des Roboters 6 um die jeweilige Achse 6a-6f aufweisen. Jeder dieser Servomotoren ist elektrisch mit dem zweiten Netzteil 52 verbunden und ist kommunizierend mit der zweiten Steuervorrichtung 48 verbunden.

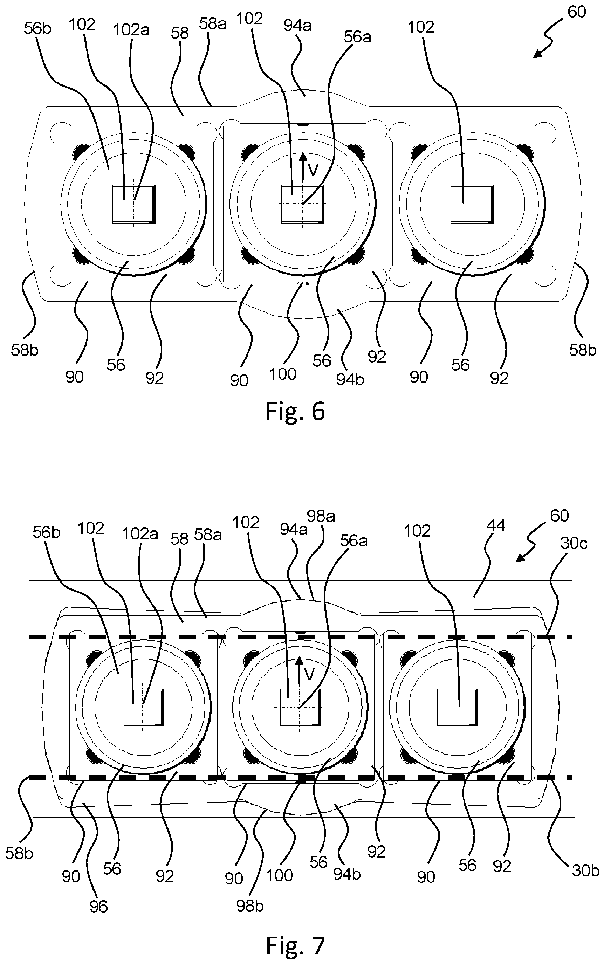

Der Rahmen 44 des Transportwagens 8 ist entlang der Verpackungsmaschine 4 beweglich gelagert. Hierzu umfasst der Transportwagen 8 eine Mehrzahl von Laufrollen 56, mittels derer der der Rahmen 44 des Transportwagens 8 beweglich auf den Führungsschienen 30, 32 gelagert ist. Der Rahmen 44 kann einen oder mehrere Träger 58 aufweisen, an denen die Mehrzahl von Laufrollen 56 drehbar gelagert ist. In der dargestellten Ausführungsform weist der Rahmen 44 vier Träger 58 auf, an denen jeweils drei Laufrollen 56 angebracht sind. Dadurch umfasst der Transportwagen 8 eine Mehrzahl von Laufrollenpaketen 60, von denen jedes zumindest zwei Laufrollen 56 der Mehrzahl von Laufrollen 56 und einen Träger 58 umfasst. Eine bevorzugt Ausführungsform der Laufrollenpakete 60 sowie deren Lagerung am Transportwagen 8 ist unter Bezugnahme auf Fig. 6 und 7 beschrieben.

Wie in Fig. 3 und 4 zu sehen, weisen die Führungsschienen 30, 32 bevorzugt ein im Wesentlichen C-förmiges Querschnittsprofil auf mit jeweils einem ersten Schenkel 30a, 32a und einem zweiten Schenkel 30b, 32b und einem dritten Schenkel 30c, 32c. Der zweite und der dritte Schenkel 30b, c, 32b, c erstrecken sich senkrecht von jeweils einem Ende des ersten Schenkels 30a, 32a. Der jeweils erste Schenkel 30a, 32a ist vertikal ausgerichtet und jeder zweite und dritte Schenkel 30b, c, 32b, c ist horizontal ausgerichtet. Die Führungsschienen 30, 32 bilden dadurch jeweils zwischen dem zweiten und dem dritten Schenkel 30b, c, 32b, c eine Aufnahme für die Laufrollen 56. Im normalen Betrieb stützen die unteren zweiten Schenkel 30b, 32b der Führungsschienen 30, 32 die Last des Transportwagens 8 mit Roboter 6 ab. Zudem können die oberen dritten Schenkel 30c, 32c Kräfte aufnehmen, die bei ruckartigen Bewegungen des Transportwagens 8 oder Roboters 6 aus einem Kippmoment resultieren. Besonders bevorzugt können die Laufrollen 56 auch axial am jeweils ersten Schenkel 30a, 32a der Führungsschienen 30, 32 abgestützt sein, wie aus der Beschreibung der Figuren 6 und 7 hervorgeht.

Zum Bewegen des Transportwagens 8 entlang der Verpackungsmaschine 4 umfasst die Verpackungsanlage 2 eine Zahnstange 62 und der Antrieb 38 des Transportwagens 8 umfasst ein Ritzel 64, das mit der Zahnstange 62 in Eingriff steht. Über die Zahnstange 62 und das Ritzel 64 wird eine rotatorische Antriebsbewegung des Antriebs 38 in eine translatorische Bewegung des Transportwagens 8 entlang der Zahnstange 62 umgewandelt. Die Zahnstange 62 verläuft entlang der Verpackungsmaschine 4, vorzugsweise parallel zu den Führungsschienen 30, 32. Wie dargestellt, kann die Zahnstange 62 auch an einer Führungsschiene 30, insbesondere auf dem oberen dritten Schenkel 30c angeordnet sein.

Um die Ansammlung von Verschmutzungen zwischen den Zähnen der Zahnstange 62 zu vermeiden, sind die Zahnstange 62 und das Ritzel 64 horizontal nebeneinander angeordnet. Die Drehachse des Ritzels 64 erstreckt sich somit vertikal. Die Zähne der Zahnstange 62 und des Ritzels 64 sind dadurch seitwärts gerichtet. Die Spitzen oder Stirnflächen der Zähne der Zahnstange 62 verlaufen dann im Wesentlichen vertikal und nicht horizontal. Dadurch wird verhindert, dass sich in den Tälern zwischen den Zähnen Verschmutzungen ansammeln können, wodurch eine gute Reinigung der Verpackungsanlage 2 begünstigt wird.

Zur elektrischen Versorgung der Komponenten auf dem Transportwagen 8 über den Stromabnehmer 42 umfasst die Verpackungsanlage 2 einen Stromleiter 66, der hier als Leiterschiene ausgebildet ist und mit dem der Stromabnehmer 42 in Schleifkontakt steht. Der Stromleiter 66 ist mit einer Spannungsquelle der Verpackungsanlage 2 verbunden und versorgt darüber den Stromabnehmer 42 und somit den Transportwagen 8 mit elektrischer Spannung. Auch der Stromleiter 66 verläuft parallel zu den Führungsschienen 30, 32, vorzugsweise beabstandet zu diesen, um für den Stromabnehmer 42 gut zugänglich zu sein. Sind, wie hier, zwei Führungsschienen 30, 32 vorgesehen, kann der Stromleiter 66 zwischen den zwei Führungsschienen 30, 32 oder bevorzugt auf einer Seite außerhalb der beiden Führungsschienen 30, 32 angeordnet sein. Vorzugsweise weisen der Stromabnehmer 42 und der Stromleiter 66 eine korrespondierende Querschnittsform auf, sodass der Stromabnehmer 42 den Stromleiter 66 teilweise umgibt, um für eine zuverlässige und ununterbrochene Stromversorgung zu sorgen.

In Fig. 3 und 4 ist ferner eine Abdeckung 68 im Bereich der Führungsschienen 30, 32 dargestellt, die eine Einhausung bildet, in der die Führungsschienen 30, 32 und vorzugsweise auch der Stromleiter 66 und die Zahnstange 62 aufgenommen sind, wodurch diese gegenüber der Mehrzahl von Bearbeitungsstationen 10, 12, 14, 16, 18 vor Verschmutzung geschützt werden. Die Abdeckung 68 ist mehrteilig ausgebildet und umfasst einen ersten Abdeckungsabschnitt 70, einen zweiten Abdeckungsabschnitt 72 und einen dritten Abdeckungsabschnitt 74. Die die Abdeckungsabschnitte 70, 72, 74 sind derart angeordnet, dass sie oberhalb jeder Führungsschiene 30, 32 einen Spalt 76, 78 bilden. Insbesondere ist zwischen dem ersten und dem zweiten Abdeckungsabschnitt 70, 72 ein erster Spalt 76 parallel zu und oberhalb der Führungsschiene 30 ausgebildet und zwischen dem zweiten und dem dritten Abdeckungsabschnitt 72, 74 ein zweiter Spalt 78 parallel zu und oberhalb der Führungsschiene 32 ausgebildet. Durch den ersten und den zweiten Spalt 76, 78 ist der Transportwagen 8 auf den Führungsschienen 30, 32 gelagert, zum Beispiel indem sich die Träger 58 vom Rahmen 44 durch den ersten bzw. zweiten Spalt 76, 78 hindurch erstrecken.

Der Durchtritt von Verschmutzungen durch den ersten und den zweiten Spalt 76, 78 kann weiterhin dadurch verringert werden, dass an jedem Spalt 76, 78 Bürsten (nicht dargestellt) angeordnet sind, deren Borsten sich quer durch den jeweiligen Spalt 76, 78 erstrecken und so Verschmutzungen zurückhalten, während sie die Bewegung des Transportwagens 8 entlang der Führungsschienen 30, 32 nicht behindern.

Ist die Datenübertragungseinrichtung 36 eine optische Datenübertragungseinrichtung, wie eingangs beschrieben, erfolgt die Datenkommunikation mittels Lichtstrahlen. Um eine Beeinträchtigung der Datenübertragung zu vermeiden und eine zuverlässige Übertragungsqualität sicherzustellen, erfolgt die Datenübertragung mittels der Datenübertragungseinrichtung 36 innerhalb der durch die Abdeckung 68 gebildeten Einhausung, was aber nicht zwangsläufig der Fall sein muss. Wie in den Figuren 2 und 5 zu sehen, kann die Datenübertragungseinrichtung 36 eine erste Kommunikationsschnittstelle 80 umfassen, die dazu eingerichtet ist mit der Maschinensteuerung zu kommunizieren und unterhalb des Rahmens 44 des Transportwagens 8 an diesem angeordnet ist. Insbesondere ist die erste Kommunikationsschnittstelle 80 an einem Träger 58 angebracht, um sie unterhalb der Abdeckung 68 zu platzieren.

Die Maschinensteuerung kann kommunizierend mit einer Übertragungseinrichtung 82 verbunden sein, die insbesondere als Sender ausgebildet ist. Die erste Kommunikationsschnittstelle 80 ist als Empfänger ausgebildet, sodass die Übertragungseinrichtung 82 und die Kommunikationsschnittstelle 80 über einen Lichtstrahl 84 zwischen ihnen kommunizieren können, wie in Fig. 2 angedeutet. Es versteht sich, dass sowohl die erste Kommunikationsschnittstelle 80 als auch die Übertragungseinrichtung 82 jeweils als Sender und Empfänger ausgebildet sein können, um eine bidirektionale Kommunikation zu ermöglichen. In Fig. 2 ist zu sehen, dass sich der Lichtstrahl 84 etwa auf einer Höhe mit den Laufrollen 56 erstreckt. Besonders bevorzugt ist der Lichtstrahl 84 parallel zur Bewegungsrichtung und somit zu den Führungsschienen 30, 32 ausgerichtet, da er so im Wesentlichen unabhängig von der Position des Transportwagens 8 relativ zur Übertragungseinrichtung 82 eine Verbindung zwischen dieser und der ersten Kommunikationsschnittstelle 80 gewährleistet. Insbesondere muss der Lichtstrahl 84 der Bewegung des Transportwagens 8 nicht folgen, da sich dieser nur parallel zum Lichtstrahl 84 bewegt.

Sind mehrere Roboter 6, 6' entlang der Verpackungsmaschine 4 vorgesehen, ist es von Vorteil, wenn die Datenübertragungseinrichtung 36 weiterhin eine zweite Kommunikationsschnittstelle 86 (siehe Fig. 2) umfasst, die dazu eingerichtet ist, mit einer Datenübertragungseinrichtung 36' des weiteren Transportwagens 8' zu kommunizieren. Die zweite Kommunikationsschnittstelle 86 ist insbesondere als Sender ausgebildet, kann aber auch als Sender und Empfänger ausgebildet sein, sodass die Kommunikation zwischen dem weiteren Transportwagen 8' und dem Transportwagen 8 bidirektional erfolgen kann. Vorzugsweise ist die zweite Kommunikationsschnittstelle 86 analog zur ersten Kommunikationsschnittstelle 80 angeordnet und ausgebildet, mit dem Unterschied dass die erste Kommunikationsschnittstelle 80 der Übertragungseinrichtung 82 zugewandt ist und die zweite Kommunikationsschnittstelle 86 dem weiteren Transportwagen 8' zugewandt ist. Dadurch kann der weitere Transportwagen 8' ein Steuersignal empfangen, das von der Übertragungseinrichtung 82 an die erste Kommunikationsschnittstelle 80 gesendet wird, von dieser empfangen und an die zweite Kommunikationsschnittstelle 86 weitergeleitet wird und von der zweiten Kommunikationsschnittstelle 86 mittels eines Lichtstrahls 88 an den weiteren Transportwagen 8' gesendet wird.

In den Figuren 6 und 7 ist ein Laufrollenpaket 60 detaillierter dargestellt. Das Laufrollenpaket 60 umfasst zumindest zwei, hier drei Laufrollen 56 der Mehrzahl von Laufrollen 56 und einen Träger 58, an dem die Laufrollen 56 drehbar gelagert sind. Zum Beispiel weist der Träger 58 für jede Laufrolle 56 eine Aufnahme 90 auf, die eine Lagerung 92 der jeweiligen Laufrolle 56 aufnimmt und festlegt.

Der Träger 58 kann integral mit dem Rahmen 44 des Transportwagens 8 ausgebildet sein, fest mit dem Rahmen 44 verbunden sein, oder wie dargestellt schwenkbar am Rahmen 44 des Transportwagens 8 gelagert sein. Dies kann beispielsweise dadurch erreicht werden, dass der Träger 58 zwei vorzugsweise symmetrisch angeordnete Lagerstellen 94a, b umfasst. Der Rahmen 44 weist eine Aussparung 96 auf, die den Träger 58 aufnimmt und zwei mit den Lagerstellen 94a, b des Trägers 58 korrespondierende Lagersitze 98a, b aufweist. Der Träger 58 kann eine im Wesentlichen rechteckige Form aufweisen, wobei die Lagerstellen 94a, b integral mit dem Träger 58 ausgebildet sind und sich in Form eines Kreisabschnitts von jeweils einem Längsrand (bzw. einer Breitseite 58a) des Trägers 58 aus nach außen erstrecken. Die Lagersitze 98a, b sind entsprechend als Lagerschalen im korrespondierender Form eines Kreisabschnitts ausgebildet, sodass die Lagerstellen 94a, b und die Lagersitze 98a, b flächig miteinander in Kontakt stehen und ein Schwenken des Trägers 58 in der Aussparung 96 erlauben. Die Aussparung 96 ist dazu in den Bereichen neben den Lagersitzen 98a, b größer als der Träger 58, wie in Fig. 7 zu sehen. Eine weitere Führung des Trägers 58 in der Aussparung 96 kann an den Schmalseiten 58b des Trägers 58 erfolgen, indem der Träger 58 und die Aussparung 96 auch dort eine korrespondierende, vorzugsweise gewölbte Form aufweisen und flächig miteinander in Kontakt stehen.

Unabhängig von der Lagerung bzw. Anbindungen des Trägers 58 am Rahmen 44 ist es weiterhin bevorzugt, dass zumindest eine Laufrolle 56 des Laufrollenpakets 60 in einer Richtung senkrecht zu einer Lauffläche der zumindest einen Führungsschiene 30,32 und vorzugsweise zu einer Drehachse 56a der Laufrolle 56 verstellbar ist. In der dargestellten Ausführungsform ist die mittlere Laufrolle 56 verstellbar. Die Drehachse 56a ist senkrecht zur Zeichenebene ausgerichtet. Die Richtung der Verstellung ist durch den Pfeil V gekennzeichnet. Die Aufnahme 90 der verstellbaren Laufrolle 56 ist in Richtung V größer als die Lagerung 92 der Laufrolle 56, während die Breite der Aufnahme 90 in einer Richtung quer zur Richtung V im Wesentlichen der Breite der Lagerung 92 entspricht. Dadurch ist die Lagerung 92 in Richtung V verschiebbar in der Aufnahme 90 aufgenommen und die Laufrolle 56 entsprechend in Richtung V verschiebbar gelagert. Das Verstellen der Laufrolle 56 kann beispielsweise mittels eines Gewindestifts 100 erfolgen, der parallel zur Richtung V ausgerichtet ist.

In Fig. 7 sind der zweite und der dritte Schenkel 30b, c der C-förmigen Führungsschiene 30 gestrichelt angedeutet. Aufgrund der Schwerkraft liegen die beiden äußeren Laufrollen 56 auf dem zweiten Schenkel 30b auf und stützen das Gewicht des Transportwagens 8 und des Roboters 6 auf der Führungsschiene 30 ab. Die mittlere, verstellbare Laufrolle 56 kann nun präzise gegen den oberen dritten Schenkel 30c positioniert werden, sodass über diese auch nach oben gerichtete Kräfte auf die Führungsschiene 30 übertragen werden können.

Grundsätzliche kann der Transportwagen 8 auch lateral an der zumindest einen Führungsschiene 30 abgestützt sein. Hierzu können Stützrollen 102 vorgesehen sein, deren Achse 102a senkrecht zur Lauffläche der Führungsschiene 30 ausgerichtet ist. Die Stützrollen 102 können am vertikalen ersten Schenkel 30a, 32a der jeweiligen Führungsschiene 30, 32 Abrollen und eine Kraft auf diesen übertragen. Die Achse 102a der Stützrollen 102 ist vorzugsweise senkrecht zur Achse 56a der Laufrollen 56 ausgerichtet und eine Kraftübertragung von den Stützrollen 102 auf die Führungsschienen 30, 32 erfolgt in axialer Richtung der Laufrollen 56. In einer bevorzugten Ausführungsform ist jeweils eine Stützrolle 102 drehbar in einer Nabe 56b einer Laufrolle 56 oder in der Lagerung 92 einer Laufrolle 56 gelagert.

Die hierin beschriebenen Aspekte der Anordnung und Lagerung des Transportwagens 8 auf der zumindest einen Führungsschiene 30, 32 tragen jeweils für sich sowie vorteilhaft kombiniert zu einer besonders präzisen und zuverlässigen Lagerung und Führung des Transportwagens 8 auf der zumindest einen Führungsschiene 30, 32 bei, insbesondere auch unter erschwerenden Bedingungen, wie der erhöhten Masse des Transportwagens 8 durch die Aufnahme sämtlicher für den Betrieb erforderlichen Komponenten oder aufgrund der Belastungen durch ruckartige Bewegungen oder Fehlbedienung des Transportwagens 8 oder des Roboters 6 sowie die bei großen Robotern auftretenden Reaktionskräfte.

## Patentansprüche

1. Verpackungsanlage (2) mit
einer Verpackungsmaschine (4), die eine Mehrzahl von Bearbeitungsstationen (10, 12, 14, 16, 18) umfasst, die in einer Durchlaufrichtung (D) der Verpackungsmaschine (4) hintereinander angeordnet sind; und
einem Roboter (6), der auf einem Transportwagen (8) gelagert ist, wobei der Transportwagen (8) entlang der Verpackungsmaschine (4) verfahrbar ist;
wobei der Transportwagen (8) einen Rahmen (44), einen Stromabnehmer (42) und eine Mehrzahl von Betriebskomponenten umfasst;
wobei der Rahmen (44) entlang der Verpackungsmaschine (4) beweglich gelagert ist, eine Lageranordnung (54) aufweist, auf der der Roboter (6) gelagert ist, und die Mehrzahl von Betriebskomponenten trägt;
wobei der Stromabnehmer (42) zum Übertragen eines elektrischen Stroms auf den Transportwagens (8) dazu ausgebildet ist, kabellos mit einer Stromquelle in Verbindung zu stehen; und
wobei die Mehrzahl von Betriebskomponenten umfasst:
eine Datenübertragungseinrichtung (36), die zur drahtlosen Kommunikation mit einer Maschinensteuerung der Verpackungsmaschine (4) eingerichtet ist; und
einen Antrieb (38) zum Bewegen des Transportwagens (8) entlang der Verpackungsmaschine (4).

2. Verpackungsanlage (2) nach Anspruch 1, **dadurch gekennzeichnet, dass** die Mehrzahl von Betriebskomponenten weiterhin zumindest einen Verdichter (40, 41), insbesondere einen Druckluftkompressor (40) und/oder eine Vakuumpumpe (41) umfasst.

3. Verpackungsanlage (2) nach Anspruch 1 oder 2, **dadurch gekennzeichnet, dass** die Mehrzahl von Betriebskomponenten weiterhin zumindest eine Steuervorrichtung (46) zur Steuerung des Antriebs (38) und zur Steuerung des Roboters (6) umfasst.

4. Verpackungsanlage (2) nach einem der vorangehenden Ansprüche, **dadurch gekennzeichnet, dass** der Transportwagen (8) zumindest ein erstes Netzteil (50) und ein zweites Netzteil (52) umfasst, die jeweils mit dem Stromabnehmer (42) elektrisch verbunden sind, wobei das erste Netzteil (50) dazu eingerichtet ist, zur elektrischen Energieversorgung der Mehrzahl von Betriebskomponenten auf dem Transportwagen (8) eine Eingangsspannung in eine erste Ausgangsspannung umzuwandeln, und wobei das zweite Netzteil (52) dazu eingerichtet ist, zur elektrischen Energieversorgung des Roboters (6) auf dem Transportwagen (8) die Eingangsspannung in eine zweite Ausgangsspannung umzuwandeln.

5. Verpackungsanlage (2) nach einem der vorangehenden Ansprüche, **dadurch gekennzeichnet, dass** die Mehrzahl von Betriebskomponenten weiterhin zumindest einen Sensor umfasst, wobei der zumindest eine Sensor gewählt ist aus einem optischen Sensor zur Identifikation zu transportierender Güter, zur Dokumentation des Betriebs des Roboters (6) oder zur Überwachung eines Umfelds des Roboters (6), einem Positionssensor zur Erkennung der Position des Transportwagens (8) und/oder des Roboters (6), einem Beschleunigungs- oder Vibrationssensor zur Überwachung des Transportwagens (8) und/oder des Roboters (6).

6. Verpackungsanlage (2) nach einem der vorangehenden Ansprüche, **dadurch gekennzeichnet, dass** die Verpackungsanlage (2) zumindest eine Führungsschiene (30) umfasst, die entlang der Verpackungsmaschine (4) und vorzugsweise zumindest abschnittsweise parallel zur Durchlaufrichtung (D) verläuft, wobei der Rahmen (44) des Transportwagens (8) beweglich auf der zumindest einen Führungsschiene (30) gelagert ist.

7. Verpackungsanlage (2) nach Anspruch 6, **dadurch gekennzeichnet, dass** der Transportwagen (8) eine Mehrzahl von Laufrollen (56) umfasst und der Rahmen (44) des Transportwagens (8) mittels der Mehrzahl von Laufrollen (56) beweglich auf der zumindest einen Führungsschiene (30) gelagert ist.

8. Verpackungsanlage (2) nach Anspruch 7, **dadurch gekennzeichnet, dass** der Transportwagen (8) eine Mehrzahl von Laufrollenpaketen (60) umfasst, wobei jedes Laufrollenpaket (60) zumindest zwei Laufrollen (56) der Mehrzahl von Laufrollen (56) und einen Träger (58) umfasst, an dem die zumindest zwei Laufrollen (56) drehbar gelagert sind, wobei der Träger (58) schwenkbar am Rahmen (44) des Transportwagens (8) gelagert ist.

9. Verpackungsanlage (2) nach Anspruch 8, **dadurch gekennzeichnet, dass** eine Laufrolle (56) der zumindest zwei Laufrollen (56) jedes Laufrollenpakets (60) in einer Richtung (V) senkrecht zu einer Lauffläche der zumindest einen Führungsschiene (30) und vorzugsweise senkrecht zu einer Drehachse (56a) der Laufrolle (56) verstellbar ist.

10. Verpackungsanlage (2) nach einem der vorangehenden Ansprüche, **dadurch gekennzeichnet, dass** die Verpackungsanlage (2) einen Stromleiter (66), insbesondere ein Leiterkabel oder eine Leiterschiene, umfasst und der Stromabnehmer (42) des Transportwagens (8) mit dem Stromleiter (66) in Schleifkontakt steht.

11. Verpackungsanlage (2) nach einem der vorangehenden Ansprüche, **dadurch gekennzeichnet, dass** die Verpackungsanlage (2) eine Zahnstange (62) umfasst, die entlang der Verpackungsmaschine (4) verläuft, und der Antrieb (38) des Transportwagens (8) ein Ritzel (64) umfasst, das mit der Zahnstange (62) in Eingriff steht.

12. Verpackungsanlage (2) nach einem der vorangehenden Ansprüche, **dadurch gekennzeichnet, dass** die Verpackungsanlage (2) zumindest einen weiteren Roboter (6') umfasst, der auf einem weiteren Transportwagen (8') gelagert ist, wobei der weitere Transportwagen (8') entlang der Verpackungsmaschine (4) verfahrbar ist.

13. Verpackungsanlage (2) nach einem der vorangehenden Ansprüche, **dadurch gekennzeichnet, dass** die Datenübertragungseinrichtung (36) eine optische Datenübertragungseinrichtung (36) ist.

14. Verpackungsanlage (2) nach Anspruch 12 und Anspruch 13, **dadurch gekennzeichnet, dass** die Datenübertragungseinrichtung (36) eine erste Kommunikationsschnittelle (80) und eine zweite Kommunikationsschnittstelle (86) umfasst, wobei die erste Kommunikationsschnittstelle (80) dazu eingerichtet ist, mit der Maschinensteuerung zu kommunizieren, und die zweite Kommunikationsschnittstelle (86) dazu eingerichtet ist, mit einer Datenübertragungseinrichtung (36') des weiteren Transportwagens (8') zu kommunizieren.

15. Verpackungsanlage (2) nach einem der vorangehenden Ansprüche, **dadurch gekennzeichnet, dass** zumindest eine erste Bearbeitungsstation (14) der Mehrzahl von Bearbeitungsstationen (10, 12, 14, 16, 18) in einem Reinraum (R) angeordnet ist und der Roboter (6) im Bereich der ersten Bearbeitungsstation (14) ebenfalls in dem Reinraum (R) angeordnet ist.

16. Verpackungsanlage (2) nach einem der vorangehenden Ansprüche, **dadurch gekennzeichnet, dass** die Mehrzahl von Bearbeitungsstationen (10, 12, 14, 16, 18) zumindest eine Formstation (12), eine Füllstation (14), eine Siegelstation (16), eine Stanzstation (18) und einen Kartonierer umfasst, wobei der Roboter (6) entlang aller Bearbeitungsstationen (10, 12, 14, 16, 18) der Mehrzahl von Bearbeitungsstationen (10, 12, 14, 16, 18) verfahrbar ist;
wobei die Verpackungsanlage (2) zumindest einen Bereitstellungsraum (26) für Verbrauchsmaterial umfasst und der Roboter (6) dazu eingerichtet ist, die Mehrzahl von Bearbeitungsstationen (10, 12, 14, 16, 18) mit Verbrauchsmaterial zu versorgen.
